(19)

Europäisches Patentamt

European Patent Office

Office européen des brevets

(11) **EP 4 539 586 A1**

## (12) EUROPEAN PATENT APPLICATION
published in accordance with Art. 153(4) EPC

(43) Date of publication:
**16.04.2025 Bulletin 2025/16**

(21) Application number: **23820085.1**

(22) Date of filing: **07.06.2023**

(51) International Patent Classification (IPC):
**H04W 76/15** (2018.01)　　**H04W 48/20** (2009.01)
**H04W 24/10** (2009.01)　　**H04W 84/12** (2009.01)
**H04B 7/024** (2017.01)

(52) Cooperative Patent Classification (CPC):
**H04B 7/024; H04W 24/10; H04W 48/20;
H04W 76/15; H04W 84/12**

(86) International application number:
**PCT/KR2023/007752**

(87) International publication number:
**WO 2023/239149 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.06.2022 KR 20220070277**

(71) Applicant: **LG Electronics Inc.
Yeongdeungpo-gu
Seoul 07336 (KR)**

(72) Inventors:
• **CHUN, Jinyoung
Seoul 06772 (KR)**
• **CHOI, Jinsoo
Seoul 06772 (KR)**
• **LIM, Dongguk
Seoul 06772 (KR)**
• **PARK, Eunsung
Seoul 06772 (KR)**

(74) Representative: **Plasseraud IP
104 Rue de Richelieu
CS92104
75080 Paris Cedex 02 (FR)**

(54) **MULTIPLE ACCESS POINT OPERATION-BASED SIGNALING METHOD AND DEVICE IN WIRELESS LAN SYSTEM**

(57)　A method and a device for operating in a wireless LAN system are disclosed. A method pelformed by a first STA in a wireless LAN system, according to one embodiment of the present disclosure, comprises the steps of: receiving, from a first AP, a first NDP null data physical protocol data unit (PPUD) announcement frame; receiving the NDP frame from the first AP on the basis of the NDP announcement frame; and transmitting, to a second AP, a feedback frame for the NDP frame, wherein the NDP announcement frame can be transmitted to the first STA on the basis of trigger information transmitted from the second AP.

FIG.11

```
┌─────────────────────────────────┐
│ RECEIVING AN NDP ANNOUNCEMENT   │──── S1110
│     FRAME FROM THE FIRST AP     │
└─────────────────────────────────┘
                │
                ▼
┌─────────────────────────────────┐
│  RECEIVING AN NDP FRAME FROM THE│
│   FIRST AP BASED ON THE NDP     │──── S1120
│      ANNOUNCEMENT FRAME         │
└─────────────────────────────────┘
                │
                ▼
┌─────────────────────────────────┐
│ TRANSMITTING A FEEDBACK FRAME FOR│
│  THE NDP FRAME TO THE SECOND AP │──── S1130
└─────────────────────────────────┘
```

EP 4 539 586 A1

**Description**

[TECHNICAL FIELD]

The present disclosure relates to a communication operation in a Wireless Local Area Network (WLAN) system, and more specifically, to a signaling method and device based on multiple access point operation in a WLAN system.

[BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

[Disclosure]

[Technical Problem]

The technical problem of the present disclosure is to provide a signaling method and device based on multiple access point operation in a wireless LAN system.

The technical problem of the present disclosure is to provide a method and device for performing an OBSS (overlapping basic service set) sounding procedure in a wireless LAN system.

The technical objects to be achieved by the present disclosure are not limited to the above-described technical objects, and other technical objects which are not described herein will be clearly understood by those skilled in the pertinent art from the following description.

[Technical Solution]

A method for performing communication by a first station (STA) in a wireless LAN system according to one aspect of the present disclosure may include receiving an NDP (null data physical protocol data unit (PPUD)) announcement frame from a first AP; receiving an NDP frame from the first AP based on the NDP announcement frame; and transmitting a feedback frame for the NDP frame to a second AP, and the NDP announcement frame may be transmitted to the first STA based on the trigger information transmitted from the second AP.

A method for performing communication by a first AP in a wireless LAN system according to an additional aspect of the present disclosure may include receiving trigger information for transmitting an NDP (null data physical protocol data unit (PPUD)) announcement frame from a second AP; transmitting the NDP announcement frame to a first STA based on the trigger information; and transmitting the NDP frame based on the NDP announcement frame to the first STA, and a feedback frame for the NDP frame may be transmitted from the first STA to the second AP.

[Technical Effects]

According to various embodiments of the present disclosure, a method and device for multi-access point operation-based signaling in a wireless LAN system may be provided.

According to various embodiments of the present disclosure, a method and apparatus for performing an OBSS sounding procedure in a wireless LAN system may be provided.

According to various embodiments of the present disclosure, a measurement operation according to DL/UL transmission between a BSS and an adjacent OBSS can be performed, and thus, a multi-access point operation can be efficiently operated.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a block configuration diagram of a wireless communication device according to an embodiment of the present disclosure.

FIG. 2 is a diagram illustrating an exemplary structure of a WLAN system to which the present disclosure may be applied.

FIG. 3 is a diagram for describing a link setup process to which the present disclosure may be applied.

FIG. 4 is a diagram for describing a backoff process to which the present disclosure may be applied.

FIG. 5 is a diagram for describing a frame transmission operation based on CSMA/CA to which the present disclosure may be applied.

FIG. 6 is a diagram for describing an example of a frame structure used in a WLAN system to which the present disclosure may be applied.

FIG. 7 is a diagram illustrating examples of PPDUs defined in the IEEE 802.11 standard to which the present disclosure may be applied.

FIG. 8 illustrates an exemplary format of a trigger frame to which the present disclosure may be applied.

FIG. 9 is a diagram for explaining various transmission and reception techniques in a MAP environment to which the present disclosure may be applied.

FIG. 10 is a diagram for explaining a process of obtaining channel state information between BSS/OBSS AP/STA according to an embodiment of the present disclosure.

FIG. 11 is a diagram for explaining an operation performed by a first STA according to an embodiment of the present disclosure.

FIG. 12 is a diagram for explaining an operation performed by a first AP according to an embodiment of the present disclosure.

FIG. 13 is a diagram for explaining an OBSS sounding procedure according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

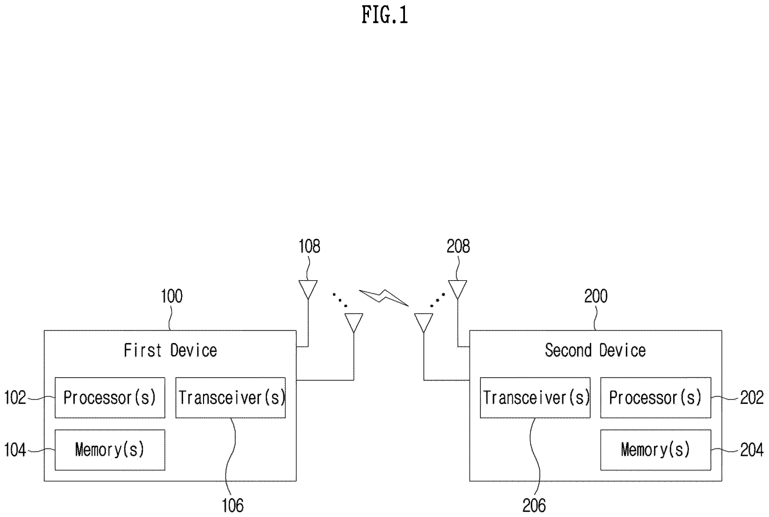

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/-signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs (Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/ encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

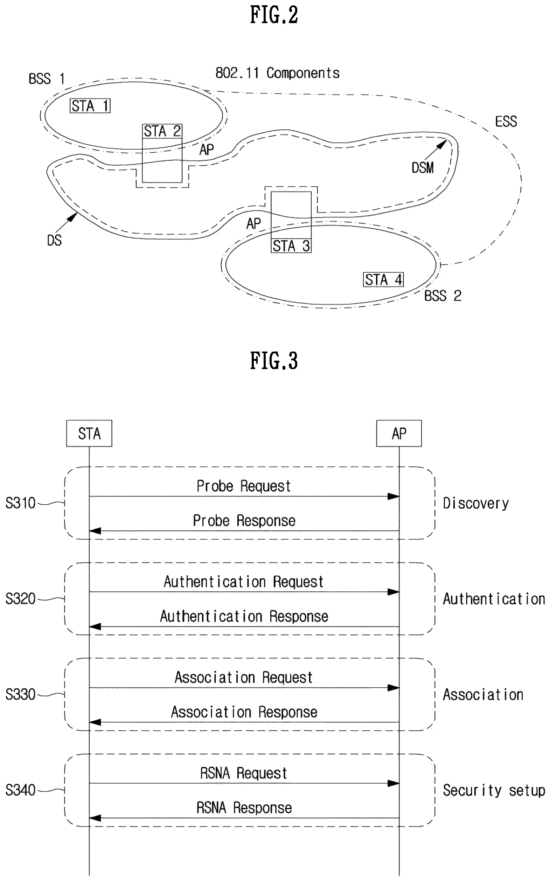

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

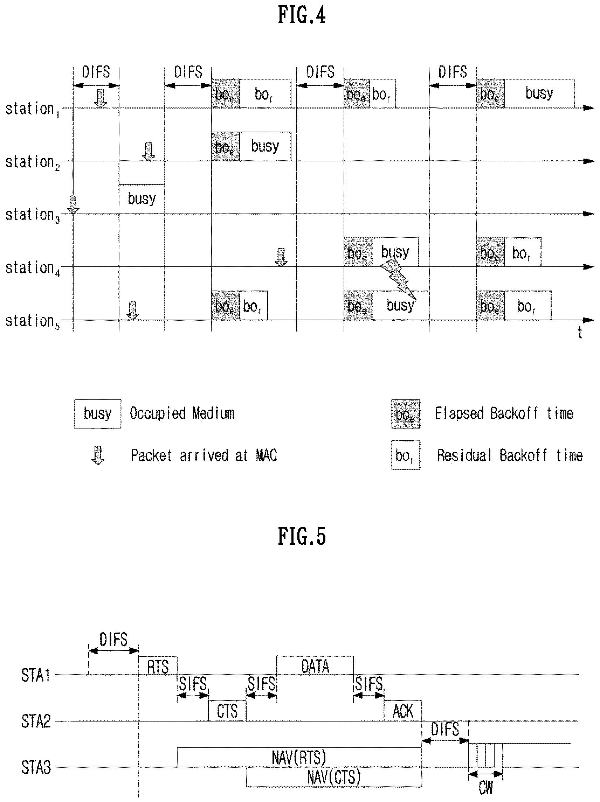

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to $2^n$-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

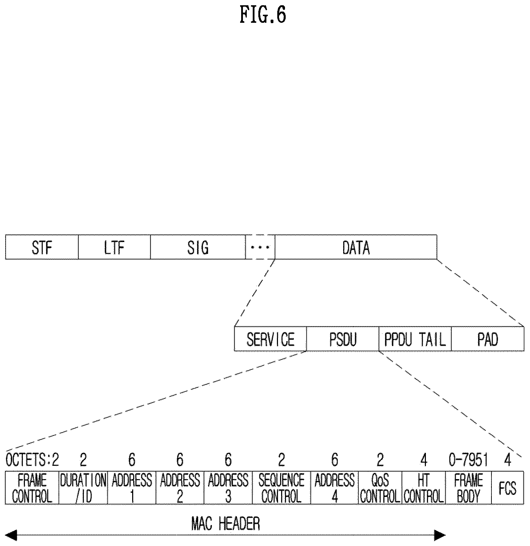

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

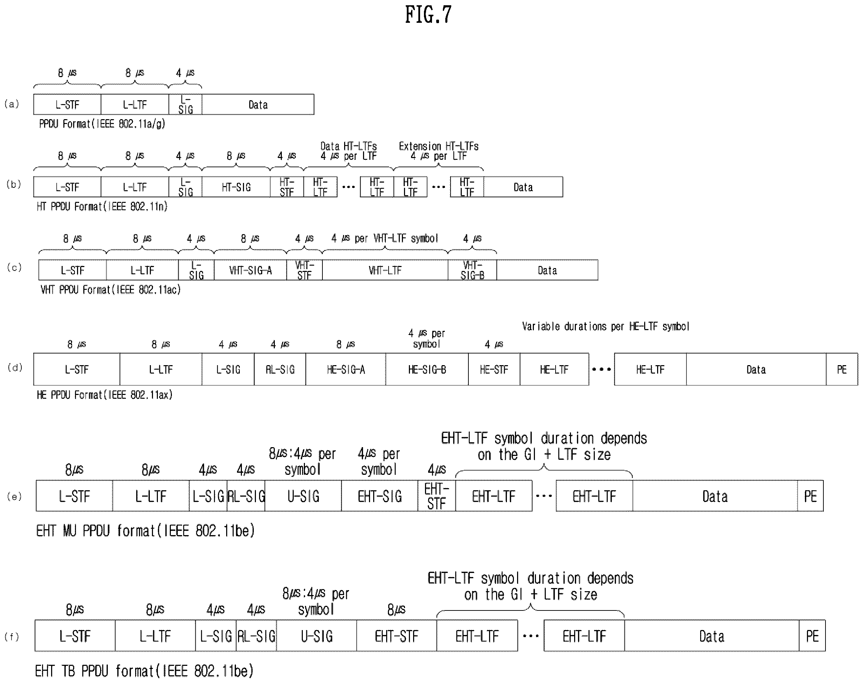

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format (as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format (as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

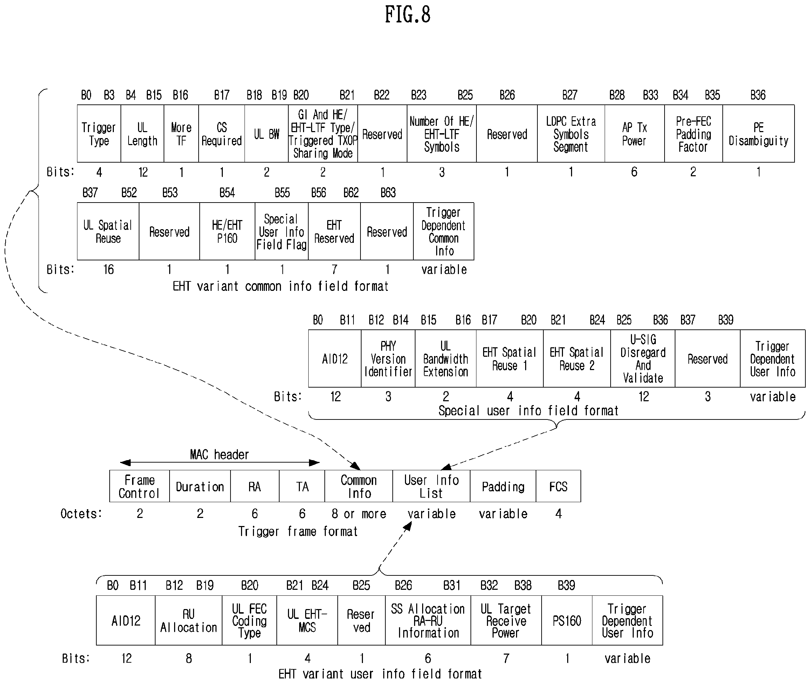

FIG. 8 illustrates an example format of a trigger frame to which the present disclosure may be applied.

The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

The common info (information) field is information commonly applied to the transmission of one or more TB PPDUs requested by a trigger frame, such as trigger type, UL length, presence or absence of a subsequent trigger frame (e.g., More TF), CS (channel sensing) request, UL BW (bandwidth), HE/EHT P160, special user info field flag, etc.

The 4-bit trigger type subfield may have values from 0 to 15. Among them, the values 0, 1, 2, 3, 4, 5, 6, and 7 of the trigger type subfield are defined to correspond to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and the values 8 to 15 are defined as reserved.

Among the common information, the trigger dependent common info subfield may include information that is optionally included based on the trigger type.

A special user info field may be included in the trigger frame. The special user info field does not include user specific information, but includes extended common information that is not provided in the common info field.

The user info list includes zero or more user info fields. FIG. 14 illustrates an example of an EHT variant user info field format.

The AID12 subfield basically indicates that it is a user info field for the STA with the corresponding AID. In addition, if the AID12 field has a specific predetermined value, it may be used for other purposes, such as allocating a random access (RA)-RU or being configured as a special user info field. A special user info field is a user info field that does not include user-specific information but includes extended common information not provided in the common info field. For example, the special user info field may be identified by an AID12 value of 2007, and the special user info field flag subfield within the common info field may indicate whether the special user info field is included.

The RU allocation subfield may indicate the size and location of RU/MRU. For this purpose, the RU allocation subfield may be interpreted together with the PS160 (primary/secondary 160MHz) subfield of the user information field, the UL BW subfield of the common information field, etc.


Multi-Access Point (MAP) Operation

Hereinafter, examples of the present disclosure for multi-access point (MAP) operation are described.

MAP operation may be defined as an operation between a master AP (or sharing AP) and a slave AP (or shared AP).

The master AP initiates and controls MAP operations for transmission and reception between multiple APs. The master AP groups slave APs and manages links with slave APs so that information can be shared between the slave APs. The master AP manages information on the BSSs configured by the slave APs and information on STAs associated with the BSS.

A slave AP may associate with a master AP and share control information, management information, and data traffic with each other. A slave AP performs the same basic functions of an AP that can establish a BSS in a wireless LAN.

In MAP operation, an STA may associate with a slave AP or a master AP and form a BSS.

In a MAP environment, a master AP and a slave AP may perform direct transmission and reception with each other. A master AP and a STA may not perform direct transmission and reception with each other. A slave AP (e.g., a slave AP associated with an STA) may perform direct transmission and reception with the STA. One of the slave APs may become a master AP.

MAP operation is a technique in which one or more APs transmit and receive information to one or more STAs. For example, coordinated-time division multiple access (C-TDMA) that divides allocation between APs along the time axis, coordinated-orthogonal frequency division multiple access (C-OFDMA) that divides allocation between APs along the frequency axis, and coordinated-spatial reuse (C-SR) that utilizes spatial reuse can be applied for the MAP operation. Alternatively, coordinated beamforming (C-BF) or joint beamforming techniques that cooperatively perform simultaneous transmission and reception may also be applied to the MAP operation.

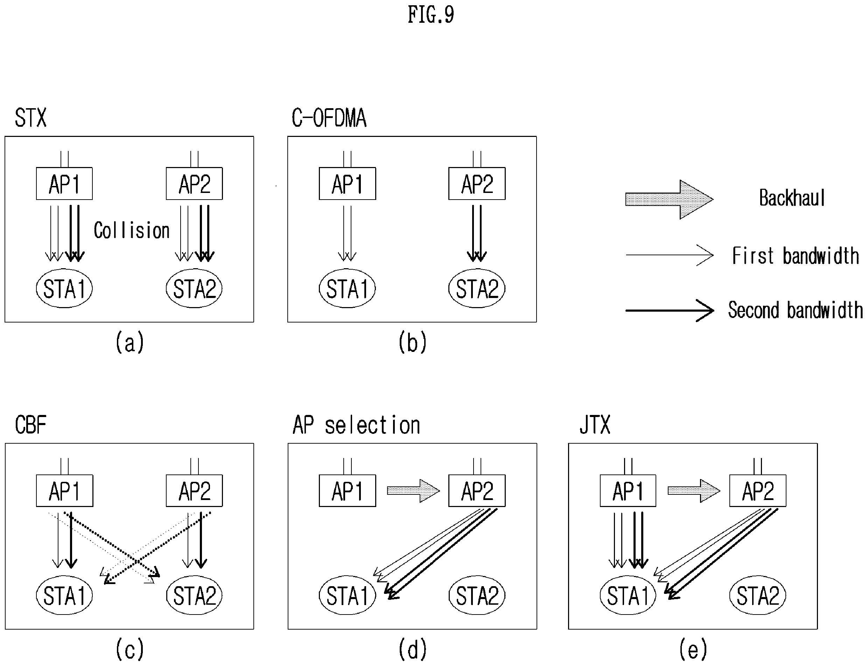

FIG. 9 is a diagram for describing various transmission and reception techniques in a MAP environment to which the present disclosure may be applied.

As in the conventional method, when a BSS AP transmits to a BSS STA, it may be referred to as STX (single transmission). In STX, there is a problem that the performance of transmission and reception for users/STAs located at the cell edge is reduced due to interference with adjacent APs. For example, as shown in Fig. 9(a), when AP 1 and AP 2 transmit to STA1 and STA2, respectively, at the same time in the same frequency bandwidth, a collision may occur on the wireless medium.

In the MAP technique, performance can be improved by reducing inter-symbol interference (ISI) through cooperation between neighboring APs, or by performing joint transmission. For example, in the C-OFDMA method of Fig. 9(b), interference can be avoided by having AP1 transmit to STA1 in the first bandwidth and AP2 transmit to STA2 in the second bandwidth at the same time.

The example of Fig. 9(c) illustrates a cooperative beamforming or nulling technique in which interference to AP2 and/or STA2 is nulled while AP1 transmits to STA1, and interference to AP1 and/or STA1 is nulled while AP2 transmits to STA2.

FIG. 9(d) shows an AP selection method in which an AP with a good channel condition among adjacent APs performs transmission.

Joint transmission (JTX) or joint reception (JRX) may be applied, in which multiple APs cooperate to transmit or receive simultaneously, as in the example of Fig. 9(e), and further, joint MU-MIMO may be supported.

C-SR(coordinated spatial reuse) technique

When the SP technique is applied in a basic wireless LAN system, the status of the BSS AP may be transmitted (by the BSS AP) through a trigger frame or TB PPDU, etc. If the OBSS AP can transmit data in a situation satisfying Equation 1, the C-SR technique may control the power of the BSS AP/STA as well as the power of the OBSS AP/STA.

【Equation 1】

$$TxPower_{PSRT,total} - 10 \times log_{10}N_{PSRT,nonpunc} \leq PSR_{min} - RPL_{PSRT,20MHz}$$

In Equation 1, PSR is the SR value of the trigger frame and the SIG field of the TB PPDU, and RPL may mean the received signal power.

In order to apply the C-SR technique, the interference situation of BSS AP/STA and/or OBSS AP/STA must be confirmed.

The following describes the procedure for performing C-SR with OBSS AP/STA from the perspective of BSS AP/STA. Here, BSS AP is either Sharing AP or Shared AP, and OBSS AP may be interpreted as a shared AP that performs C-SR together.

The C-SR procedure may consist of a pre-procedure, a Shared AP(s) candidate selection procedure, a C-SR setup procedure, and a data transmission procedure.

The pre-procedure refers to a procedure for reporting and collecting information to be exchanged in advance for C-SR operation. APs/STAs may obtain channel information of BSS/OBSS APs/STAs based on the direction of the frame that is the target of the C-SR operation (e.g., DL direction or UL direction).

For example, a BSS STA may obtain channel information from an on-going packet or NDP sounding frame of an OBSS AP and transmit the obtained channel information to the BSS AP.

In addition, in order to apply C-SR in RU units, acquisition of channel information in RU units rather than full-band may be required. For example, a BSS STA may acquire channel information in RU units from an NDP sounding frame of an OBSS AP and report the acquired channel information in RU units to the BSS AP.

In the case of the Shared AP(s) candidate selection procedure, the Sharing AP can select the Shared AP(s) candidate by collecting information about neighboring APs.

For example, assume that nulling is not required based on the distance between APs (e.g., the distance between APs is not too close). In this case, if the RSSI measurement value related to the AP is within a specific value (e.g., -82dBM), the Sharing AP may select the Shared AP(s) from among the AP(s) whose channel status is busy.

The C-SR setup procedure may include a procedure for selecting shared AP(s) to exchange C-SR data (before starting C-SR data transmission) and confirming whether C-SR data may be transmitted or received with the selected shared AP(s). The C-SR setup procedure may be performed before SIFS of the C-SR data transmission procedure.

Some parts of the C-SR setup procedure may be omitted. For example, at least one of the procedures for checking whether the selected Shared AP(s) may transmit and receive C-SR data or the procedure for selecting the shared AP(s) with which to exchange C-SR data may be omitted.

For example, when a trigger frame for C-SR setup is transmitted (by the Sharing AP) to the Shared AP(s), the Shared AP(s) capable of transmitting and receiving C-SR data may transmit a confirm message indicating whether C-SR data transmission and reception is possible or not to the Sharing AP. Accordingly, the Sharing AP may confirm whether the Shared AP(s) can transmit and receive C-SR data.

The data transmission procedure may include a procedure for transmitting a C-SR trigger frame (or a separate DL frame) for C-SR data transmission and a procedure for OBSS/BSS APs to transmit and receive C-SR data based on the C-SR trigger frame. The C-SR trigger frame may be configured based on the trigger frame illustrated in FIG. 8.

Here, the C-SR trigger frame (or a separate DL frame) may include basic information for performing a C-SR operation (i.e., C-SR data transmission and reception). For example, the basic information may include information such as transmit power (Tx power) of the BSS AP (or, Sharing AP), a Tx power limit value to be used by the Shared AP(s), an acceptable interference level of the BSS AP (or, Sharing AP), TXOP duration, DL frame length, DL/UL type of the Sharing/Shared AP, etc.

A Shared AP that receives a trigger frame may transmit its own data based on the C-SR technique, or may include C-SR information in a trigger frame for data transmission of an OBSS/BSS STA and transmit it.

Method for obtaining channel information in pre-procedure during C-SR procedure

Hereinafter, a method of acquiring channel information in a pre-procedure during a C-SR procedure is described. An AP/STA must acquire channel information of BSS/OBSS AP/STA(s) based on the direction of the frame to which the C-SR technique is to be applied (i.e., DL direction or UL direction).

Here, the method for the BSS AP/STA and the OBSS AP/STA to adjust the Tx power using the channel value (e.g., interference value) of the BSS and the method for implementing C-SR may be implemented in various ways.

Method 1

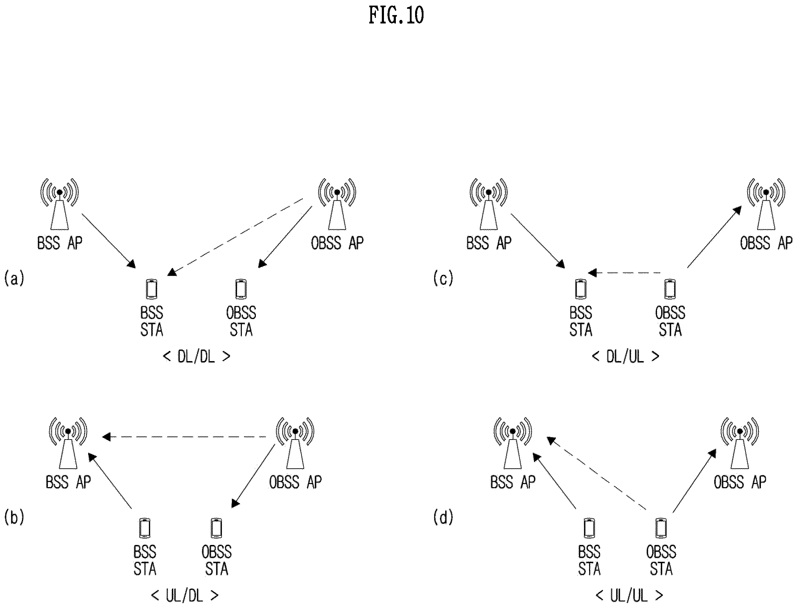

As illustrated in (a) of FIG. 10, Method 1 relates to a method for obtaining channel information when performing DL transmission of a BSS AP and DL transmission of an OBSS AP (hereinafter, "DL/DL"). In order for a BSS AP to transmit a DL frame using the C-SR technique in a DL/DL situation, interference information of the OBSS AP toward the BSS STA is required. Accordingly, the BSS STA may measure a channel value for a DL frame of the OBSS AP and report it to the BSS AP.

For example, the BSS STA may measure the channel value of an on-going packet (e.g., a beacon frame, etc.) of the OBSS AP. That is, the OBSS AP transmits the on-going packet to the BSS STA, and the BSS STA may obtain the channel value through the received on-going packet. The operation of obtaining the channel value based on the on-going packet may be performed by the indication of the BSS AP or according to the decision of the BSS STA.

As another example, an NDP sounding procedure (hereinafter, "OBSS NDP sounding") may be performed between an OBSS AP and a BSS STA under the direction of a BSS AP (or, Sharing AP). That is, the BSS STA may obtain a channel value based on the NDP transmitted by the OBSS AP.

In describing the present disclosure, "channel value" may include at least one of RSSI (Received signal strength indication), RPI (Rx Power Indicator), ANPI (Avg Noise Power Indicator), IPI (Idle Power Indicator), RCPI (Rx Channel power Indicator) or RSNI (Rx Signal to Noise Indicator).

Additionally, the channel value measured by the BSS/OBSS AP/STA in the present disclosure may include the overall channel value for the indicated band (by the BSS/OBSS AP), or the channel value for the indicated/allocated RU(s).

Method 2

As illustrated in (b) of FIG. 10, Method 2 relates to a method for obtaining channel information when performing UL reception of a BSS AP and DL transmission (hereinafter, "UL/DL") of an OBSS AP. In a UL/DL situation, in order for a BSS STA to transmit a UL frame using the C-SR technique, interference information of an OBSS AP directed toward the BSS AP may be required. That is, the BSS AP may measure a channel value for a DL frame from the OBSS AP.

For example, a BSS AP may measure the channel value of an on-going packet (e.g., a beacon frame, etc.) of an OBSS AP. In this case, since the BSS AP directly measures/obtains the channel value, a separate reporting procedure for the channel value may not be necessary.

As another example, the BSS AP may obtain the channel value through the OBSS NDP sounding procedure. Since the measurement value feedback procedure for the OBSS NDP for C-SR in the UL/DL situation is not required, the NDP sounding procedure may be completed by the OBSS NDP transmission or the BSS AP's ACK transmission for the OBSS NDP transmission.

As another example, when the OBSS sounding procedure is performed considering a DL/DL situation, the OBSS sounding procedure may include a procedure in which the BSS STA transmits feedback after the OBSS AP transmits NDP.

Method 3

As illustrated in (c) of FIG. 10, Method 3 relates to a method for obtaining channel information when performing DL transmission of a BSS AP and UL reception of an OBSS AP (hereinafter, "DL/UL"). In a DL/UL situation, interference information of an OBSS STA toward a BSS STA may be required for the BSS AP to transmit a DL frame using the C-SR technique.

Accordingly, BSS STA(s) may measure and report channel values for all OBSS STAs supporting the C-SR procedure. Here, BSS STA(s) may use on-going packets or OBSS NDP sounding procedure.

On the other hand, STA may not be able to measure and report channel values as smoothly as AP. Since there is no regular on-going packet and measurements are required as many as the number of OBSS STAs, the feedback overhead value of BSS STAs may increase in DL/UL situations. Therefore, C-SR technique may not be allowed in DL/UL situations.

Method 4

As illustrated in (d) of FIG. 10, Method 4 relates to a method for obtaining channel information when performing UL reception of a BSS AP and UL reception of an OBSS AP (hereinafter, "UL/UL"). In a UL/UL situation, in order for a BSS STA to transmit a UL frame using the C-SR technique, interference information of an OBSS AP directed toward the BSS AP may be required.

In the "DL/DL" situation, the BSS STA may report the interference channel measurement value from the OBSS AP to the BSS AP. Accordingly, the OBSS AP may receive the channel measurement value from the BSS AP from the OBSS STA based on the OBSS STA. The OBSS AP may transmit the interference channel measurement value received from the OBSS STA to the BSS AP. For example, the OBSS AP may transmit the interference channel measurement value to the BSS AP through a control message over the air or backbone.

Accordingly, the BSS AP may indicate the BSS STA to adjust Tx power for C-SR through a trigger frame. That is, a data sharing procedure between the BSS AP and the OBSS AP may be required for C-SR transmission in a UL/UL situation.

Hereinafter, the OBSS NDP sounding procedure described above will be described in detail. The 'OBSS NDP sounding procedure' may mean, but is not limited to, the C-SR NDP sounding procedure. The 'OBSS NDP sounding procedure' may be replaced with the 'multi-AP sounding procedure (i.e., the sounding procedure performed by multi-APs)'.

The NDP sounding procedure of a basic wireless LAN system may include an operation in which a BSS STA reports a channel value obtained by measuring an NDP transmitted from a BSS AP. However, in the basic wireless LAN system, an OBSS sounding procedure initiated by a BSS AP is not defined. That is, in the basic wireless LAN system, an operation for measuring and reporting interference due to DL/UL transmission between a BSS and an adjacent OBSS is not defined.

An OBSS NDP sounding procedure of one embodiment of the present disclosure may include an operation of measuring an NDP frame transmitted by an OBSS AP (or, a Shared AP) at the direction of the BSS AP and reporting the same to the BSS AP. That is, the present disclosure relates to an operation of obtaining channel interference information for multi-AP operation according to the OBSS NDP sounding procedure.

Additionally or alternatively, as described in Method 2, the OBSS NDP sounding procedure may include an operation in which, when the OBSS AP transmits an NDP frame at the direction of the BSS AP (or, the Shared AP), the BSS AP measures the corresponding NDP frame to obtain channel information.

In describing the present disclosure, it is assumed that a BSS AP is interpreted as a Sharing AP and an OBSS AP is interpreted as a Shared AP. However, this is not limited to the above, and each of the BSS AP and the OBSS AP may be interpreted as either a Sharing AP or a Shared AP.

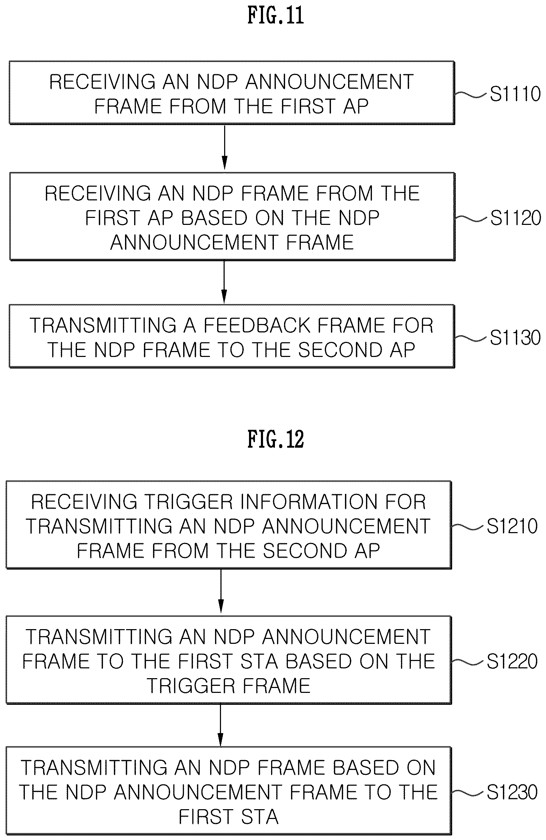

FIG. 11 is a diagram for explaining an operation performed by a first STA according to an embodiment of the present disclosure. Hereinafter, the first STA may be a BSS STA, the second STA may be an OBSS STA, the first AP may be an OBSS AP (or, Shared AP), and the second AP may be a BSS AP (or, Sharing AP). That is, the first AP and the second AP may perform a (C-)SR-based multi-AP operation.

The first STA may receive an NDP announcement frame from the first AP (S1110).

Here, the NDP announcement frame may be transmitted from the first AP to the first STA based on trigger information transmitted from the second AP. That is, the second AP may indicate the first AP to transmit the NDP announcement frame and/or the NDP frame.

For example, the trigger information may include information about a transmission domain (e.g., frequency domain) and transmission method of at least one of the NDP announcement frames or the NDP frame.

The trigger information may be transmitted from the second AP to the first AP via a trigger frame or a separate control frame. If the trigger information is included in the trigger frame, the trigger frame may include a trigger type subfield indicating an overlapping basic service set (OBSS) NDP sounding procedure.

Here, the RA (receiver address) subfield included in the NDP announcement frame may be set to the BSSID (basic service set identifier) of the second AP. Additionally or alternatively, the AID (association identifier)12 subfield included in the STA information (info) field of the NDP announcement frame may be set to a specific AID. Accordingly, the NDP announcement frame may indicate that the NDP frame is transmitted from the first AP to the first STA.

The first STA may receive an NDP frame from the first AP based on the NDP announcement frame (S1120).

That is, the first STA may receive an NDP frame and measure the corresponding NDP frame through information included in the NDP announcement frame (e.g., the area/method through which the NDP is transmitted, information on the portion of the NDP to be measured, reporting method, etc.).

For example, based on the NDP frame being transmitted from the first AP to the first STA, the indication information for the transmission area of the feedback frame for the NDP frame may be transmitted from the second AP to the first STA. Then, an ACK frame for the NDP frame may be transmitted from the second AP to the first AP.

The first STA may transmit a feedback frame for the NDP frame to the second AP (S1130).

For example, based on indication information requesting a feedback frame (i.e., sounding measurement results/channel information for NDP frame, etc.) being received from at least one of the first AP or the second AP, the first STA may transmit the feedback frame to the second AP based on at least one of the NDP announcement frame or the instruction information.

The first STA may receive C(coordinated)-SR(spatial reuse) based data associated with a feedback frame from the second AP.

Specifically, the second AP may obtain channel information between the first STA and the first AP through a feedback frame in order to perform a C-SR operation. The second AP may generate C-SR-based data (i.e., C-SR-based data associated with the feedback frame) using the obtained channel information. The first STA can receive the C-SR-based data from the second AP.

The method performed by the first STA described in the example of FIG. 11 may be performed by the first device (100) of FIG. 1. For example, one or more processors (102) of the first device (100) of FIG. 1 may be configured to receive an NDP announcement frame from a first AP via one or more transceivers (106). The one or more processors (102) may be configured to receive an NDP frame from the first AP via one or more transceivers (106) based on the NDP announcement frame. The one or more processors (102) may be configured to transmit a feedback frame for the NDP frame to a second AP via one or more transceivers (106).

Furthermore, one or more memories (104) of the first device (100) may store instructions for performing the method described in the example of FIG. 11 when executed by one or more processors (102).

FIG. 12 is a drawing for describing an operation performed by a first AP according to one embodiment of the present disclosure.

The first AP may receive trigger information for transmitting an NDP announcement frame from the second AP (S1210).

That is, the first AP may receive trigger information from the second AP that triggers the execution of an OBSS NDP sounding procedure. The first AP may identify the area and method for transmitting the NDP announcement frame and/or NDP through the trigger information.

The first AP may transmit an NDP announcement frame to the first STA based on the trigger frame (S1220).

Here, the NDP announcement frame may include a field indicating that the NDP frame is transmitted from the first AP. For example, the RA subfield included in the NDP announcement frame may be set to the BSSID of the second AP. Additionally or alternatively, the AID12 subfield included in the STA information field of the NDP announcement frame may be set to a specific AID.

The first AP may transmit an NDP frame based on the NDP announcement frame to the first STA (S1230). A feedback frame for the NDP frame may be transmitted from the first STA to the second AP.

The method performed by the first AP described in the example of FIG. 12 may be performed by the second device (200) of FIG. 1. For example, one or more processors (202) of the second device (200) of FIG. 1 may be configured to receive a trigger frame for transmitting an NDP announcement frame from the second AP through one or more transceivers (206). The one or more processors (202) may be configured to receive an NDP announcement frame based on the trigger frame through one or more transceivers (206). The one or more processors (202) may be configured to transmit an NDP frame based on the NDP announcement frame to the first STA through one or more transceivers (206).

Furthermore, one or more memories (204) of the second device (200) may store instructions for performing the method described in the example of FIG. 12 when executed by one or more processors (202).

Hereinafter, the OBSS NDP sounding procedure performed based on the NDP transmitted by the OBSS AP is specifically described.

Embodiment 1

A BSS AP (or Sharing AP) may transmit trigger information for OBSS NDP sounding to an OBSS AP (or Shared AP).

For example, the trigger information may include information about at least one OBSS AP to transmit an NDP frame (or/and an NDP announcement frame), an area to transmit the NDP frame (or/and an NDP announcement frame), and a method to transmit the NDP frame (or/and an NDP announcement frame).

For example, the trigger information may include encoding information such as BSSID(s) of the OBSS AP that will transmit the NDP frame (or/and the NDP announcement frame), BW of the NDP frame (or/and the NDP announcement frame), RU allocation, MCS, coding type, number of streams, and LTF configuration.

Additionally or alternatively, when measurement and reporting of NDP(s) is instructed to BSS STA(s), the trigger information may include BSS STA(s) information for the instruction and information of NDP to be measured (e.g., AID(s), BSSID or NDP area to be measured, etc.).

The trigger information may be transmitted via a separate control frame. As another example, the trigger information may be transmitted via a trigger frame as illustrated in FIG. 8. When the trigger information is transmitted via a trigger frame, the trigger frame may include i) information indicating that the trigger frame is a trigger frame for OBSS NDP sounding, ii) information indicating that the trigger frame is a trigger frame for indicating an AP to transmit (an NDP frame or/and an NDP announcement frame), or/and iii) information indicating that the trigger frame is a trigger frame for multi-AP/C-SR operation.

Here, a new trigger type may be defined to indicate information according to i), ii), or/and iii). That is, a trigger frame may include information indicating a trigger type related to information according to i), ii), or/and iii).

And, the OBSS AP may transmit NDP announcement information for OBSS NDP sounding. For example, the OBSS AP can transmit NDP announcement information to the BSS AP/BSS STA.

Here, the NDP announcement information may include information on how the NDP is configured. For example, the NDP announcement information may include information on the OBSS(s) to transmit the NDP, the area to transmit the NDP, the method for transmitting the NDP, and/or information on which BSS STA measures and reports which part of the NDP. That is, the NDP announcement information may include a reporting method and reporting information based on the NDP frame.

NDP announcement information may be transmitted via new control information. However, this is only an example, and the NDP announcement information may be transmitted via an NDP announcement frame. When the NDP announcement information is transmitted via an NDP announcement frame, the NDP announcement frame may include a field indicating that the OBSS AP, not the BSS AP, transmits the NDP.

For example, the RA subfield of the NDP announcement frame may be set to the BSSID of the BSS AP. Additionally or alternatively, the AID12 of the STA information (info) field of the NDP announcement frame may be set to a specific AID. Accordingly, the NDP announcement frame may indicate that the OBSS AP, not the BSS AP, transmits the NDP.

Additionally or alternatively, in order to indicate the BSS STA to provide feedback, the OBSS AP may transmit NDP announcement information including information on how to configure the NDP to the BSS STA. That is, the OBSS AP may request feedback from the BSS STA by directly configuring the STA information field. Alternatively, the BSS AP may request feedback from the BSS STA (i.e., transmit a frame requesting feedback) when transmitting a trigger frame or transmitting ACK information for NDP frame transmission.

The OBSS AP may transmit an NDP frame. For example, the OBSS AP may transmit the NDP frame to the BSS AP/BSS STA that transmitted the NDP announcement frame. The NDP frame may be based on the NDP frame format described above (e.g., the frame format with the data field removed from the PPDU format illustrated in FIG. 7).

The BSS AP may transmit ACK information to the OBSS AP for confirmation of reception of the NDP frame transmitted by the OBSS AP. Additionally or alternatively, the BSS AP may transmit a trigger frame to the BSS STA(s) indicating an area for transmitting feedback information to the BSS STA(s). At this time, the BSS STA(s) may be an STA that has received the NDP frame. Here, the procedure for the BSS AP to transmit ACK information or trigger frame information may be omitted.

In a procedure where a BSS AP transmits an ACK frame/trigger frame, if the BSS STA(s) receive indication information (related to feedback/measurement) of the BSS AP or/and the OBSS AP, the BSS STA(s) may measure part or all of the NDP according to the indication information. That is, the BSS STA(s) may transmit feedback information based on the NDP in the indicated form in the indicated area to the BSS AP/OBSS AP.

Here, the indication information of the BSS AP or/and the OBSS AP may include information included in a trigger frame transmitted from the BSS AP or/and an NDP announcement frame transmitted from the OBSS AP. Additionally or alternatively, the indication information of the BSS AP or/and the OBSS AP may include feedback request information transmitted from the BSS AP or/and the OBSS AP.

The BSS AP may transmit ACK information to the BSS STA(s) for confirmation of reception of the feedback frame. Additionally or alternatively, if there is additional information to be fed back, the BSS AP may transmit a trigger frame indicating an area for transmitting the feedback information to the BSS STA(s).

Here, the form of the trigger frame may be, but is not limited to, the form of a BFRP frame, and may also be the form of the trigger frame described above. Accordingly, the BSS STA(s) may perform NDP measurement and/or feedback information transmission procedures.

Embodiment 2

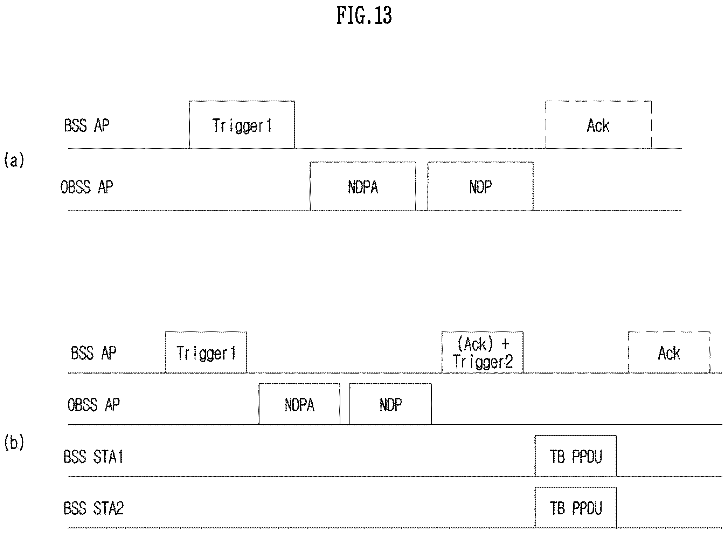

FIG. 13 (a) is a diagram for explaining a process of performing an OBSS sounding procedure between a BSS AP and an OBSS AP according to one embodiment of the present disclosure.

The BSS AP may transmit trigger information to the OBSS AP for triggering the OBSS sounding procedure. Based on receiving the trigger information, the OBSS AP may transmit an NDP announcement frame and NDP to the BSS AP. The BSS AP may obtain channel information based on the NDP based on the NDP announcement frame.

Here, the BSS AP may transmit ACK information confirming receipt of the NDP frame to the OBSS AP. However, the ACK information transmission operation of the BSS AP may be omitted.

FIG. 13 (b) is a diagram for explaining a process of performing an OBSS sounding procedure between a BSS AP/OBSS AP and BSS STA(s) according to one embodiment of the present disclosure.

The BSS AP may transmit trigger information to the OBSS AP for triggering the OBSS sounding procedure. Based on receiving the trigger information, the OBSS AP may transmit an NDP announcement frame and NDP to the BSS STA(s) (e.g., BSS STA 1 and BSS STA2).

Here, the BSS AP may transmit an ACK frame for NDP transmission or/and a trigger frame indicating the area where the BSS STA(s) transmit feedback information to the OBSS AP/BSS STA(s) .

BSS STA(s) may measure NDP based on the NDP announcement frame and/or trigger frame, and transmit feedback including the measurement result to the BSS AP/OBSS AP. Accordingly, the BSS AP may transmit an ACK frame for the feedback.

Since the trigger information, NDP notification frame, and NDP configuration are described in Embodiment 1, redundant description is omitted.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

[Industrial Applicability]

A method proposed by the present disclosure is mainly described based on an example applied to an IEEE 802.11-based system, 5G system, but may be applied to various WLAN or wireless communication systems other than the IEEE 802.11-based system.

**Claims**

1. A method performed by a first station (STA) in a wireless LAN system, the method comprising:

    receiving an NDP (null data physical protocol data unit (PPUD)) announcement frame from a first AP;
    receiving an NDP frame from the first AP based on the NDP announcement frame; and
    transmitting a feedback frame for the NDP frame to a second AP,
    wherein the NDP announcement frame is transmitted to the first STA based on the trigger information transmitted from the second AP.

2. The method of claim 1, wherein:
    the trigger information includes information on transmission area and transmission method of at least one of the NDP announcement frame or the NDP frame.

3. The method of claim 1, wherein:

    the trigger information is transmitted from the second AP to the first AP through a trigger frame, and
    the trigger frame includes a trigger type subfield indicating an OBSS (overlapping basic service set) NDP sounding procedure.

4. The method of claim 1, wherein:
    a RA (receiver address) subfield included in the NDP announcement frame is set to a BSSID (basic service set identifier) of the second AP.

5. The method of claim 1, wherein:

    an AID (association identifier) 12 subfield included in the STA information (info) field of the NDP announcement frame is set to a specific AID, and
    the AID12 subfield indicates that the NDP frame is transmitted by the first AP.

6. The method of claim 1, wherein:
    based on the NDP frame being transmitted from the first AP to the first STA, indication information for transmission area of the feedback frame for the NDP frame is transmitted from the second AP to the first AP.

7. The method of claim 6, wherein:
    based on information requesting the feedback frame being received from at least one of the first AP or the second AP, the feedback frame is transmitted to the second AP based on at least one of the NDP announcement frame or the indication information.

8. The method of claim 1, wherein:
    an ACK frame for the NDP frame is transmitted from the second AP to the first AP.

9. The method of claim 1, wherein:
    C(coordinated)-SR(spatial reuse) based data associated with the feedback frame is received from the second AP.

10. The method of claim 1, wherein:
    the first STA is a BSS STA, and the second STA is an OBSS STA.

11. A first station (STA) in a wireless local area network (WLAN) system, the first STA comprising:

> at least one transceiver; and
> at least one processor connected to the at least one transceiver,
> wherein the at least one processor is configured to:
>
> > receive an NDP (null data physical protocol data unit (PPUD)) announcement frame from a first AP through the at least one transceiver;
> > receive an NDP frame from the first AP based on the NDP announcement frame through the at least one transceiver; and
> > transmit a feedback frame for the NDP frame to a second AP through the at least one transceiver,
> > wherein the NDP announcement frame is transmitted to the first STA based on the trigger information transmitted from the second AP.

12. A method performed by the first access point (AP) in a wireless LAN system, the method comprising:

> receiving trigger information for transmitting an NDP (null data physical protocol data unit (PPUD)) announcement frame from a second AP;
> transmitting the NDP announcement frame to a first STA based on the trigger information; and
> transmitting the NDP frame based on the NDP announcement frame to the first STA, and
> wherein a feedback frame for the NDP frame is transmitted from the first STA to the second AP.

13. A first access point (AP) operating in a wireless LAN system, the first AP comprising:

> at least one transceiver; and
> at least one processor connected to the at least one transceiver,
> wherein the at least one processor is configured to:
>
> > receive trigger information for transmitting an NDP (null data physical protocol data unit (PPUD)) announcement frame from a second AP through the at least one transceiver;
> > transmit the NDP announcement frame to a first STA based on the trigger information through the at least one transceiver; and
> > transmit the NDP frame based on the NDP announcement frame to the first STA through the at least one transceiver, and
> > wherein a feedback frame for the NDP frame is transmitted from the first STA to the second AP.

14. A processing apparatus configured to control a first station operated (STA) in a wireless LAN system, the processing apparatus comprising:

> at least one processor; and
> at least one computer memory operably connected to the at least one processor and storing instructions that, based on being executed by the at least one processor, perform operations comprising:
>
> > receiving an NDP (null data physical protocol data unit (PPUD)) announcement frame from a first AP;
> > receiving an NDP frame from the first AP based on the NDP announcement frame; and
> > transmitting a feedback frame for the NDP frame to a second AP,
> > wherein the NDP announcement frame is transmitted to the first STA based on the trigger information transmitted from the second AP.

15. At least one non-transitory computer-readable medium storing at least one instruction,
wherein the at least one instruction executable by at least one processor controls a device in a wireless LAN system to:

> receive an NDP (null data physical protocol data unit (PPUD)) announcement frame from a first AP;
> receive an NDP frame from the first AP based on the NDP announcement frame; and
> transmit a feedback frame for the NDP frame to a second AP,
> wherein the NDP announcement frame is transmitted to the first STA based on the trigger information transmitted from the second AP.

EP 4 539 586 A1

FIG.1

# FIG.2

# FIG.3

# FIG.4

| busy | Occupied Medium | bo_e | Elapsed Backoff time |

$\Downarrow$    Packet arrived at MAC       $bo_r$   Residual Backoff time

# FIG.5

FIG.6

| STF | LTF | SIG | ··· | DATA |

| SERVICE | PSDU | PPDU TAIL | PAD |

| OCTETS:2 | 2 | 6 | 6 | 6 | 2 | 6 | 2 | 4 | 0-7951 | 4 |
| FRAME CONTROL | DURATION /ID | ADDRESS 1 | ADDRESS 2 | ADDRESS 3 | SEQUENCE CONTROL | ADDRESS 4 | QoS CONTROL | HT CONTROL | FRAME BODY | FCS |

MAC HEADER

# FIG.7

(a)

| 8 μs | 8 μs | 4 μs | |
|------|------|------|--|
| L-STF | L-LTF | L-SIG | Data |

PPDU Format(IEEE 802.11a/g)

(b)

Data HT-LTFs 4 μs per LTF    Extension HT-LTFs 4 μs per LTF

| 8 μs | 8 μs | 4 μs | 8 μs | 4 μs | | | | | |
|------|------|------|------|------|--|--|--|--|--|
| L-STF | L-LTF | L-SIG | HT-SIG | HT-STF | HT-LTF | ··· | HT-LTF | HT-LTF | ··· HT-LTF | Data |

HT PPDU Format(IEEE 802.11n)

(c)

| 8 μs | 8 μs | 4 μs | 8 μs | 4 μs | 4 μs per VHT-LTF symbol | 4 μs | |
|------|------|------|------|------|------|------|--|
| L-STF | L-LTF | L-SIG | VHT-SIG-A | VHT-STF | VHT-LTF | VHT-SIG-B | Data |

VHT PPDU Format(IEEE 802.11ac)

(d)

Variable durations per HE-LTF symbol

| 8 μs | 8 μs | 4 μs | 4 μs | 8 μs | 4 μs per symbol | 4 μs | | | | |
|------|------|------|------|------|------|------|--|--|--|--|
| L-STF | L-LTF | L-SIG | RL-SIG | HE-SIG-A | HE-SIG-B | HE-STF | HE-LTF | ··· | HE-LTF | Data | PE |

HE PPDU Format(IEEE 802.11ax)

(e)

EHT-LTF symbol duration depends on the GI + LTF size

| 8μs | 8μs | 4μs | 4μs | 8μs:4μs per symbol | 4μs per symbol | 4μs | | | | |
|-----|-----|-----|-----|------|------|------|--|--|--|--|
| L-STF | L-LTF | L-SIG | RL-SIG | U-SIG | EHT-SIG | EHT-STF | EHT-LTF | ··· | EHT-LTF | Data | PE |

EHT MU PPDU format(IEEE 802.11be)

(f)

EHT-LTF symbol duration depends on the GI + LTF size

| 8μs | 8μs | 4μs | 4μs | 8μs:4μs per symbol | 8μs | | | | |
|-----|-----|-----|-----|------|------|--|--|--|--|
| L-STF | L-LTF | L-SIG | RL-SIG | U-SIG | EHT-STF | EHT-LTF | ··· | EHT-LTF | Data | PE |

EHT TB PPDU format(IEEE 802.11be)

EP 4 539 586 A1

# FIG.8

### EHT variant common info field format

| B0–B3 | B4–B15 | B16 | B17 | B18–B19 | B20–B21 | B22 | B23–B25 | B26 | B27 | B28–B33 | B34–B35 | B36 |
|---|---|---|---|---|---|---|---|---|---|---|---|---|
| Trigger Type | UL Length | More TF | CS Required | UL BW | GI And HE/EHT-LTF Type/Triggered TXOP Sharing Mode | Reserved | Number Of HE/EHT-LTF Symbols | Reserved | LDPC Extra Symbols Segment | AP Tx Power | Pre-FEC Padding Factor | PE Disambiguity |
| Bits: 4 | 12 | 1 | 1 | 2 | 2 | 1 | 3 | 1 | 1 | 6 | 2 | 1 |

| B37–B52 | B53 | B54 | B55 | B56–B62 | B63 | |
|---|---|---|---|---|---|---|
| UL Spatial Reuse | Reserved | HE/EHT P160 | Special User Info Field Flag | EHT Reserved | Reserved | Trigger Dependent Common Info |
| Bits: 16 | 1 | 1 | 1 | 7 | 1 | variable |

EHT variant common info field format

### Special user info field format

| B0–B11 | B12–B14 | B15–B16 | B17–B20 | B21–B24 | B25–B36 | B37–B39 | |
|---|---|---|---|---|---|---|---|
| AID12 | PHY Version Identifier | UL Bandwidth Extension | EHT Spatial Reuse 1 | EHT Spatial Reuse 2 | U-SIG Disregard And Validate | Reserved | Trigger Dependent User Info |
| Bits: 12 | 3 | 2 | 4 | 4 | 12 | 3 | variable |

Special user info field format

### Trigger frame format

| Frame Control | Duration | RA | TA | Common Info | User Info List | Padding | FCS |
|---|---|---|---|---|---|---|---|
| Octets: 2 | 2 | 6 | 6 | 8 or more | variable | variable | 4 |

MAC header

Trigger frame format

### EHT variant user info field format

| B0–B11 | B12–B19 | B20 | B21–B24 | B25 | B26–B31 | B32–B38 | B39 | |
|---|---|---|---|---|---|---|---|---|
| AID12 | RU Allocation | UL FEC Coding Type | UL EHT-MCS | Reserved | SS Allocation RA-RU Information | UL Target Receive Power | PS160 | Trigger Dependent User Info |
| Bits: 12 | 8 | 1 | 4 | 1 | 6 | 7 | 1 | variable |

EHT variant user info field format

EP 4 539 586 A1

# FIG.9

STX

(a)

C-OFDMA

(b)

CBF

(c)

AP selection

(d)

JTX

(e)

Backhaul

First bandwidth

Second bandwidth

EP 4 539 586 A1

FIG.10

(a)

BSS AP          OBSS AP

BSS          OBSS
STA          STA

< DL/DL >

(b)

BSS AP          OBSS AP

BSS          OBSS
STA          STA

< UL/DL >

(c)

BSS AP          OBSS AP

BSS          OBSS
STA          STA

< DL/UL >

(d)

BSS AP          OBSS AP

BSS          OBSS
STA          STA

< UL/UL >

EP 4 539 586 A1

## FIG.11

| | |
|---|---|
| RECEIVING AN NDP ANNOUNCEMENT FRAME FROM THE FIRST AP | S1110 |

↓

| | |
|---|---|
| RECEIVING AN NDP FRAME FROM THE FIRST AP BASED ON THE NDP ANNOUNCEMENT FRAME | S1120 |

↓

| | |
|---|---|
| TRANSMITTING A FEEDBACK FRAME FOR THE NDP FRAME TO THE SECOND AP | S1130 |

## FIG.12

| | |
|---|---|
| RECEIVING TRIGGER INFORMATION FOR TRANSMITTING AN NDP ANNOUNCEMENT FRAME FROM THE SECOND AP | S1210 |

↓

| | |
|---|---|
| TRANSMITTING AN NDP ANNOUNCEMENT FRAME TO THE FIRST STA BASED ON THE TRIGGER FRAME | S1220 |

↓

| | |
|---|---|
| TRANSMITTING AN NDP FRAME BASED ON THE NDP ANNOUNCEMENT FRAME TO THE FIRST STA | S1230 |

## FIG.13

(a)

| BSS AP | Trigger1 | | | | Ack |
|--------|----------|--|--|--|-----|

| OBSS AP | NDPA | NDP |
|---------|------|-----|

(b)

| BSS AP | Trigger1 | | (Ack) + Trigger2 | Ack |
|--------|----------|--|------------------|-----|

| OBSS AP | NDPA | NDP |
|---------|------|-----|

| BSS STA1 | TB PPDU |
|----------|---------|

| BSS STA2 | TB PPDU |
|----------|---------|

EP 4 539 586 A1

## INTERNATIONAL SEARCH REPORT

| International application No. |
| --- |
| **PCT/KR2023/007752** |

| **A.** | **CLASSIFICATION OF SUBJECT MATTER** |
| --- | --- |

**H04W 76/15**(2018.01)i; **H04W 48/20**(2009.01)i; **H04W 24/10**(2009.01)i; **H04W 84/12**(2009.01)i; **H04B 7/024**(2017.01)i

According to International Patent Classification (IPC) or to both national classification and IPC

| **B.** | **FIELDS SEARCHED** |
| --- | --- |

Minimum documentation searched (classification system followed by classification symbols)

H04W 76/15(2018.01); H04B 7/024(2017.01); H04B 7/0452(2017.01); H04B 7/06(2006.01); H04L 25/02(2006.01); H04L 5/00(2006.01); H04W 28/06(2009.01); H04W 48/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NDPA, 피드백 프레임(feedback frame), 트리거(trigger), OBSS 스테이션(station), 멀티 중계기 조정(multi AP coordination)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | US 2021-0152396 A1 (QUALCOMM INCORPORATED) 20 May 2021 (2021-05-20) See paragraphs [0009], [0027], [0029], [0055], [0071], [0089] and [0099]; claims 1 and 14; and figures 4 and 7. | 1,3-4,6-8,10-15 |
| Y | | 2,5,9 |
| Y | US 2020-0274588 A1 (JIANG, Feng et al.) 27 August 2020 (2020-08-27) See paragraph [0010]; and figure 1. | 2 |
| Y | US 2018-0317128 A1 (LG ELECTRONICS INC.) 01 November 2018 (2018-11-01) See paragraphs [0240] and [0260]. | 5 |
| Y | AU, Edward et al. Specification Framework for TGbe. doc.: IEEE 802.11-20/1262r15. 20 September 2020. See page 53. | 9 |

✓ Further documents are listed in the continuation of Box C.   ✓ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 September 2023** | **14 September 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2023/007752** |

**C.    DOCUMENTS CONSIDERED TO BE RELEVANT**

| Category* | Citation of document, with indication, where appropriate, of the relevant passages | Relevant to claim No. |
|---|---|---|
| A | US 2021-0410048 A1 (NEWRACOM, INC.) 30 December 2021 (2021-12-30)<br>See claim 1. | 1-15 |

Form PCT/ISA/210 (second sheet) (July 2022)

**INTERNATIONAL SEARCH REPORT**
**Information on patent family members**

International application No.

**PCT/KR2023/007752**

| Patent document cited in search report | | | Publication date (day/month/year) | Patent family member(s) | | | Publication date (day/month/year) |
|---|---|---|---|---|---|---|---|
| US | 2021-0152396 | A1 | 20 May 2021 | CN | 114731313 | A | 08 July 2022 |
| | | | | EP | 4062606 | A1 | 28 September 2022 |
| | | | | KR | 10-2022-0104149 | A | 26 July 2022 |
| | | | | TW | 202123622 | A | 16 June 2021 |
| | | | | US | 11431529 | B2 | 30 August 2022 |
| | | | | WO | 2021-101660 | A1 | 27 May 2021 |
| US | 2020-0274588 | A1 | 27 August 2020 | US | 11621753 | B2 | 04 April 2023 |
| US | 2018-0317128 | A1 | 01 November 2018 | EP | 3367725 | A1 | 29 August 2018 |
| | | | | EP | 3367725 | B1 | 05 August 2020 |
| | | | | US | 10728799 | B2 | 28 July 2020 |
| | | | | WO | 2017-069589 | A1 | 27 April 2017 |
| US | 2021-0410048 | A1 | 30 December 2021 | None | | | |

Form PCT/ISA/210 (patent family annex) (July 2022)